# EUROPÄISCHE PATENTSCHRIFT

(11) **EP 2 055 541 B1**
(45) Veröffentlichungstag und Bekanntmachung des Hinweises auf die Patenterteilung: **13.03.2013**
(21) Anmeldenummer: 08014568.3
(22) Anmeldetag: 16.08.2008
(51) Int. Cl.: B60T 8/36, B60T 8/88, B60T 15/04, B60T 7/22, B60T 13/38, B60T 13/68, B60T 17/08, B60T 17/22

(54) **Fahrerassistenzsystem mit Steuerung der Feststellbremse**
Driver assistance system with control of parking brake
Système d'assistance du conducteur avec commande de frein de stationnement

(30) Priorität: 02.11.2007 DE 102007052439
(43) Veröffentlichungstag der Anmeldung: 06.05.2009
(73) Patentinhaber: WABCO GmbH, 30432 Hannover (DE)
(72) Erfinder: Bensch, Uwe, 30161 Hannover (DE); Breuer, Karsten, Dr., 31867 Lauenau (DE); Rosendahl, Hartmut, 30167 Hannover (DE); Strache, Wolfgang, Dr., 30966 Hemmingen (DE); Struwe, Otmar, 30163 Hannover (DE)

(56) Entgegenhaltungen:
- EP-A- 1 504 975
- EP-A- 1 571 061
- DE-A1- 19 942 533
- US-A1- 2003 006 644

## Beschreibung

Die Erfindung betrifft ein Fahrerassistenzsystem für einen Kraftwagen mit mindestens einem Betriebsdatensensor zum Erfassen von den momentanen Bewegungszustand des Kraftwagens charakterisierenden Betriebsdaten und einer elektrischen Steuerung, die ausgebildet ist, um bei einem Vorliegen von vorbestimmten Betriebsdaten eine autonome Notbremsung des Kraftwagens auszulösen.

Aus der DE 10 2005 016 001 ist ein gattungsgemäßes Fahrerassistenzsystem für einen Kraftwagen bekannt. Bei dem dort geschilderten Notbremssystem wird im Falle einer von dem Fahrerassistenzsystem ausgelösten Notbremsung zunächst eine Betriebsbremse des Kraftwagens aktiviert. Mit zunehmender Bremsdauer und damit abnehmender Geschwindigkeit des Kraftwagens wird die Bremskraft der Betriebsbremse reduziert und die Bremskraft einer Feststellbremse gleichzeitig erhöht. Dadurch wird erreicht, dass das Fahrzeug am Ende des Bremsvorganges im Wesentlichen vollständig von der Feststellbremse gebremst wird, so dass das Fahrzeug sicher steht, ohne dass es zu einem Rucken kommt.

Ein weiteres gattungsgemäßes Fahrerassistenszsystem is aus der WO 2007/049033 A1 bekannt.

Nachteilig an bekannten Systemen ist, dass eine Beschädigung elektrischer Komponenten des Bremssystems bei einem Notbremsmanöver dazu führen kann, dass das Fahrzeug nicht sicher abgebremst werden kann. Ist es bereits zu einem Zusammenstoß mit einem anderen Fahrzeug gekommen, so führt ein Ausfall von elektrischen Komponenten des Bremssystems dazu, dass das Fahrzeug nicht sicher abgestellt werden kann.

Der Erfindung liegt die Aufgabe zugrunde, Nachteile im Stand der Technik zu überwinden.

Die Erfindung löst das Problem durch ein gattungsgemäßes Fahrerassistenzsystem, bei dem die elektrische Steuerung eingerichtet ist, um unmittelbar vor, während oder nach einer Notbremsung eine Feststellbremse des Kraftwagens in eine Aktivierungsstellung zu bringen, in der ein Stromausfall die Feststellbremse passiv in eine Bremsstellung bringt.

Vorteilhaft an der Erfindung ist, dass unmittelbar vor während oder nach einer Notbremsung auch ein kompletter Ausfall der elektrischen Komponenten der Betriebs- oder Feststellbremse das Fahrzeug sicher bis zum Stand abgebremst und danach abgestellt wird. Kommt der Fahrer während oder nach der Notbremsung zu Schaden, wird ein Anrollen des Fahrzeugs nach einem Unfall verhindert.

Im Rahmen der vorliegenden Beschreibung wird unter einem Kraftwagen beispielsweise ein Personenkraftwagen, ein Lastkraftwagen, Lastkraftzug oder ein Bus verstanden. Unter einem Betriebsdatensensor ist insbesondere jeder Sensor zu verstehen, der ausgebildet und eingerichtet ist, um Daten zu erfassen, aus denen sich Rückschlüsse auf den Bewegungszustand des Kraftfahrzeugs gewinnen lassen. Unter dem Bewegungszustand des Kraftwagens wird insbesondere die Position, die Geschwindigkeit, die Beschleunigung oder die zeitliche Änderung der Beschleunigung des Kraftwagens oder sein Abstand zu einem vorausfahrenden Fahrzeug sowie die erste oder zweite Ableitung dieses Abstands verstanden. Es ist bevorzugt, nicht aber notwendig, dass der Betriebsdatensensor den Bewegungszustand unmittelbar misst. Zum Erfassen der den Bewegungszustand charakterisierenden Bewegungsdaten ist es ausreichend, dass beispielsweise eine Bremspedalstellung ermittelt wird.

Unter dem Merkmal, dass der Betriebsdatensensor zum Erfassen von den zukünftigen Bewegungszustand des Kraftwagens charakterisierenden Betriebsdaten ausgebildet ist, ist insbesondere zu verstehen, dass der Betriebsdatensensor Daten erfasst, die mit einer vorgegebenen Wahrscheinlichkeit einen Rückschluss auf einen zukünftigen Bewegungszustand zulassen. Insbesondere ist die elektrische Steuerung eingerichtet, um beim Vorliegen von Betriebsdaten, die mit der vorgegebenen Wahrscheinlichkeit darauf hindeuten, dass eine Notbremsung in einer vorgegebenen Zeit bevorsteht, die Feststellbremse in die Aktivierungsstellung zu bringen. Dazu kann auf der elektrischen Steuerung beispielsweise ein Prädiktionsalgorithmus implementiert sein, der den vom Betriebsdatensensor gemessenen Daten eine Wahrscheinlichkeit zuordnet, dass in eine Notbremsung in einer vorgegebenen Zeit bevorsteht.

Unter dem Merkmal, dass die elektrische Steuerung eingerichtet ist, um unmittelbar vor, während oder nach einer Notbremsung eine Feststellbremse des Kraftwagens in die Aktivierungsstellung zu bringen, ist zu verstehen, dass in der elektrischen Steuerung ein Algorithmus implementiert ist, der von dem mindestens einen Betriebsdatensensor kontinuierlich Betriebsdaten erfasst und beim Vorliegen vorbestimmter Betriebsdaten ein Signal abgibt, aufgrund dessen eine Notbremsung ausgelöst wird oder die Betriebsbremsen in einen Zustand gebracht werden, in dem sie für ein Notbremsmanöver vorbereitet sind. Das kann beispielsweise dadurch geschehen, dass Bremsklötze in unmittelbarer Nähe von zugeordneten Bremsscheiben gefahren werden.

Unter einer elektrischen Steuerung wird insbesondere jede Vorrichtung verstanden, die zur Verarbeitung von Daten vorgesehen und eingerichtet ist, und die Komponenten des Fahrerassistenzsystems ansteuert. Die elektrische Steuerung kann auch aus mehreren Teil-Steuerungen bestehen. Einzelne, von einander getrennte Teil-Steuerungen sind bevorzugt der Feststellbremse, der Betriebsbremse und dem Airbagsystem zugeordnet und empfangen Ansteuerbefehle von einer Haupt-Steuerung.

Als eine Notbremsung wird insbesondere eine Bremsung des Kraftwagens verstanden, die mit höchstmöglicher Verzögerung erfolgt. Die vorbestimmten Betriebsdaten werden beispielsweise in Vorversuchen ermittelt und in einer elektrischen Speichervorrichtung der elektrischen Steuerung abgelegt.

Die Notbremsung, aufgrund derer die Feststellung in die Aktivierungsstellung gebracht wird, kann eine autonome, das heißt, nicht durch den Fahrer ausgelöste, oder aber eine durch den Fahrer ausgelöste Notbremsung sein. Hat eine Notbremsung zu einem Stillstand des Kraftwagens bzw. zu einem Unterschreiten einer vorgegebenen Mindest-Geschwindigkeit des Kraftwagens geführt, ist gemäß einer bevorzugten Ausführungsform vorgesehen, dass die elektrische Steuerung ein Bremssignal an die Feststellbremse aussendet, wodurch diese aus der Aktivierungsstellung in eine Bremsstellung übergeht. In der Bremsstellung übt die Feststellbremse eine Bremskraft aus und hält den Kraftwagen so auch beim Vorliegen eines Gefälles sicher am Ort. Es kann besonders bevorzugt vorgesehen sein, dass ein Betätigen eines Fahrpedals und/oder einer manuellen Löse-Vorrichtung durch die Fahrer dazu führt, dass die Feststellbremse aus der Bremsstellung in eine Lösestellung gebracht wird. Dadurch wird erreicht, dass das Fahrzeug auch nach einer Notbremsung ebenfalls wieder gelöst werden kann.

In einer bevorzugten Ausführungsform ist die elektrische Steuerung mit einem Steuergerät eines Airbags des Kraftwagens verbunden und eingerichtet, um beim Vorliegen einer Notbremsung zu erfassen, ob der Airbag ausgelöst worden ist oder nicht. Das Steuergerät kann Messmittel zum Erfassen einer Aktivierungssituation, in der der Airbag ausgelöst werden muss, umfassen. Die Messmittel können beispielsweise durch einen Beschleunigungssensor und/oder andere geeignete Sensoren gebildet sein.

Die elektrische Steuerung ist zudem so programmiert, dass sie dann, wenn der Airbag ausgelöst worden ist, die Feststellbremse in die Bremsstellung bringt. Vorteilhaft hieran ist, dass nach einem Aufprall des Kraftwagens auf ein Hindernis, was zur Auslösung des Airbags geführt hat, das Fahrzeug stets sicher abgestellt ist, so dass es beispielsweise an einem Hang nicht unkontrolliert ins Rollen geraten kann.

Gemäß einer bevorzugten Ausführungsform ist die elektrische Steuerung eingerichtet, um die Feststellbremse moduliert zu betreiben, wenn der Kraftwagen während einer autonomen Notbremsung eine vorgegebene Mindest-Verzögerung unterschreitet. In diesem Fall ist davon auszugehen, dass die Betriebsbremsen aufgrund eines Fehlers nicht in der Lage sind, die notwendige Mindest-Verzögerung aufzubringen. Es kann gemäß einer bevorzugten Ausführungsform vorgesehen sein, dass Betriebsdaten eines Anti-Blockiersystems ausgelesen werden, um zu ermitteln, ob möglicherweise die Betriebsbremse aufgrund einer rutschigen Fahrbahn die Mindest-Verzögerung nicht aufbringen kann. Ist dies der Fall, kann vorgesehen sein, dass die Feststellbremse nicht in die Bremsstellung gebracht wird.

Gemäß einer bevorzugten Ausführungsform ist die elektrische Steuerung eingerichtet, um die Feststellbremse in einem Anti-Blockier-Modus zu betreiben, wie es aus dem Stand der Technik bekannt ist. Vorteilhaft hieran ist, dass das Fahrzeug auch bei einer Notbremsung sicher steuerbar bleibt.

Erfindungsgemäß ist außerdem ein Kraftwagen mit einem erfindungsgemäßen Fahrerassistenzsystem, einer elektro-pneumatischen Feststellbremse, die einen Federspeicher besitzt, und einer Betriebsbremse. Unter einer Betriebsbremse wird dabei wie allgemein üblich diejenige Bremse verstanden, die dazu ausgelegt ist, um im Normalbetrieb des Kraftwagens den Kraftwagen abzubremsen. Die Feststellbremse ist, wie für Feststellbremsen üblich, so ausgebildet, dass der Federspeicher den Kraftwagen bremst, sofern nicht elektrische oder pneumatische Energie zugeführt wird.

Gemäß einer bevorzugten Ausführungsform umfasst die Feststellbremse ein monostabiles Halteventil, das sich bei Normalbetrieb des Kraftwagens in einer stabilen unbestromten Durchgangsstellung befindet, ein bistabiles Pneumatikventil, das bei Normalbetrieb eines Kraftwagens in einer ersten Stellung ist und die Feststellbremse mit einer Druckluftversorgung des Kraftwagens verbindet, und einen Federspeicher. Die Feststellbremse ist bei Normalbetrieb des Kraftwagens belüftet und übt keine Bremskraft aus. Die elektrische Steuerung ist eingerichtet, um im Fall einer autonomen Notbremsung durch das Fahrerassistenzsystem die Feststellbremse in eine Aktivierungsstellung zu bringen, in der das Halteventil bestromt und dadurch geschlossen und das bistabile Pneumatikventil in der zweiten Stellung ist, wobei die Feststellbremse so ausgebildet ist, dass bei einem Stromausfall das Halteventil öffnet und die Feststellbremse entlüftet. Der Eintritt des Stromausfalls bedeutet dabei insbesondere, dass das Halteventil nicht mehr mit Strom beaufschlagt werden kann. Dadurch fällt das Halteventil in die stabile Stellung zurück, das bistabile Pneumatikventil belüftet den Federspeicher und die Feststellbremse übt eine Bremskraft auf den Kraftwagen aus.

Im Folgenden wird eine Ausführungsform der Erfindung anhand der beigefügten Zeichnungen näher erläutert. Dabei zeigt
- Figur 1: eine schematische Ansicht eines erfindungsgemäßen Kraftwagens mit einem erfindungsgemäßen Fahrerassistenzsystem,
- Figur 2: ein Schaltbild für eine elektro-pneumatische Feststellbremse zum Zusammenwirken mit einem erfindungsgemäßen Fahrerassistenzsystem in einem erfindungsgemäßen Kraftwagen,
- Figur 3: ein Schaltbild für eine alternative Ausführungsform einer elektropneumatischen Feststellbremse zum Zusammenwirken mit einem erfindungsgemäßen Fahrerassistenzsystem und
- Figur 4: ein Flussdiagramm eines erfindungsgemäßen Verfahrens, das in der elektrischen Steuerung des erfindungsgemäßen Fahrerassistenzsystems abgelegt ist.

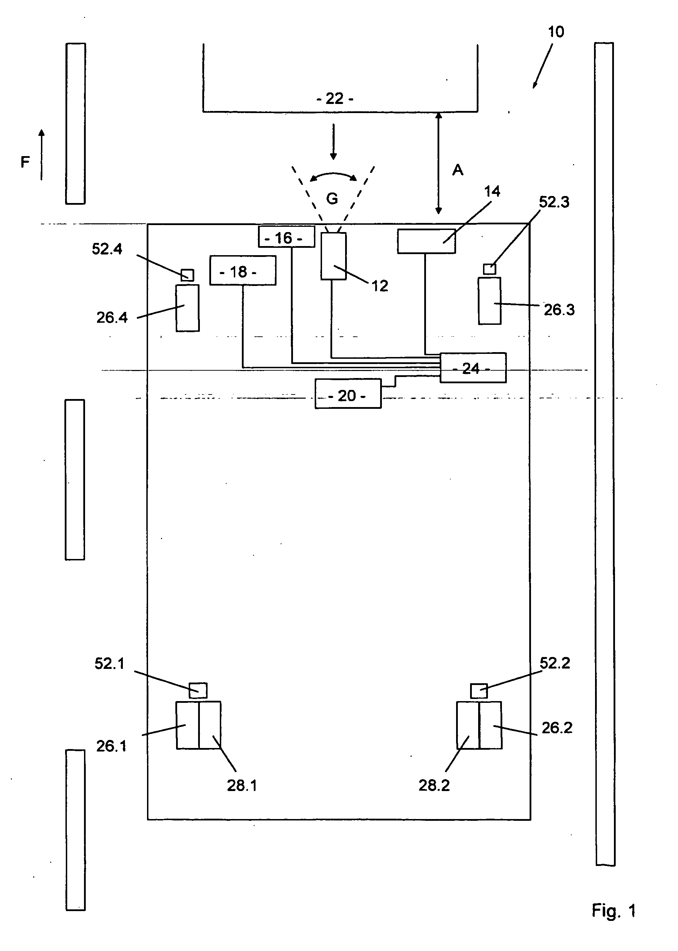

Figur 1 zeigt einen Kraftwagen 10 mit einem erfindungsgemäßen Fahrerassistenzsystem, das Betriebsdatensensoren in Form einer Kamera 12, eines Abstandssensors 14, eines Bremspedalsensors 16, eines Tachometers 18 und eines Airbag-Steuergerätes 20, das einen Beschleunigungssensor besitzt, umfasst. Der Abstandssensor 14 ist eingerichtet, um einen Abstand A zu einem bezüglich einer Fahrtrichtung F vor dem Kraftwagen 10 fahrenden Vorderfahrzeug 22 zu ermitteln und kann beispielsweise ein Radar- oder ein Ultraschallsensor sein. Die Kamera 12 hat einen Gesichtsbereich G und ist eingerichtet, um das Vorderfahrzeug 22 ebenfalls zu erfassen. Sämtliche Betriebsdatensensoren stehen in elektrischer Verbindung mit einer elektrischen Steuerung 24.

Die elektrische Steuerung 24 ist mit Betriebsbremsen 26.1, 26.2, 26.3 und 26.4 und auf Hinterräder wirkenden Feststellbremsen 28.1, 28.2 verbunden. Die Betriebsbremsen 26 und die Feststellbremsen 28 wirken auf nicht eingezeichnete Räder des Kraftwagens 10. Bezugszeichen ohne Zählsuffix bezeichnen jeweils das Objekt als solches.

Die elektrische Steuerung 24 erfasst Betriebsdaten von den Betriebsdatensensoren 14, 16, 18, 20 und ermittelt daraus, ob eine Notbremssituation vorliegt oder unmittelbar bevorsteht, in der der Kraftwagen 10 gegebenenfalls ohne Zutun eines nicht eingezeichneten Fahrers abgebremst werden muss. Ermittelt die elektrische Steuerung 24, dass eine Notbremsung mit einer vorgegebenen Wahrscheinlichkeit unmittelbar bevorsteht, bereits im Gange ist oder unmittelbar vorher stattgefunden hat, so bringt sie die Feststellbremsen 28 in eine Aktivierungsstellung, die weiter unten genauer beschrieben ist. Dass eine Notbremsung mit hoher Wahrscheinlichkeit unmittelbar bevorsteht, kann beispielsweise daraus abgeleitet werden, dass der Fahrer ein nicht eingezeichnetes Fahrpedal schlagartig entlastet.

In der Aktivierungsstellung üben die Feststellbremsen 28 keine Bremskraft aus, befinden sich jedoch in einem Zustand, in dem ein Stromausfall dazu führt, dass eine Bremskraft ausgeübt wird. Wenn die elektrische Steuerung 24 zunächst einen Zustand erfasst, der das unmittelbare Bevorstehen einer Notbremsung anzeigt, eine Notbremsung jedoch nicht durchgeführt werden muss, sondern die elektrische Steuerung 24 danach einen Zustand erfasst, der keine Notbremsung erforderlich macht, so bringt die elektrische Steuerung 24 die Feststellbremsen 28 aus der Aktivierungsstellung zurück in die Betriebsstellung, die auch als Fahrstellung bezeichnet werden kann.

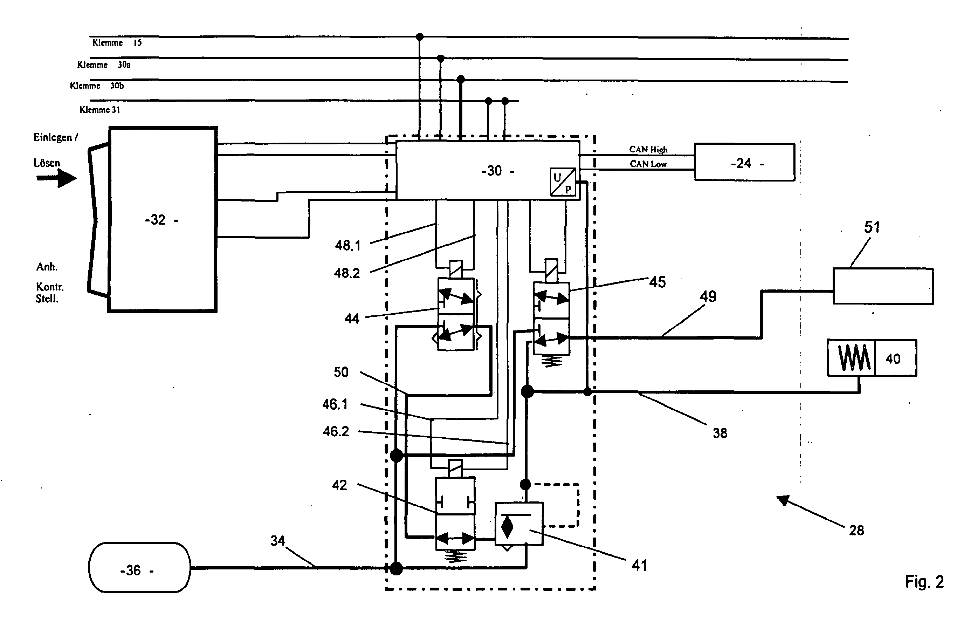

Figur 2 zeigt eine elektro-pneumatische Feststellbremse 28, die mit der elektrischen Steuerung 24 über einen CAN-Bus elektrisch verbunden ist. Die Feststellbremse 28 besitzt eine Steuereinheit 30, die über elektrische Kabel mit einer Betätigungsvorrichtung 32 verbunden ist, die zum manuellen Betätigen der Feststellbremse 28 dient. Über eine Druckluftleitung 34 steht die Feststellbremse 28 zudem in Verbindung mit einem Druckluftspeicher 36 eines Druckluftsystems. Über eine Ableitung 38 kann ein Federspeicher 40 mit Druckluft versorgt werden. Ist der Federspeicher 40 belüftet, so wird eine Federkraft einer Feder überwunden und dadurch werden Bremsbacken außer Eingriff gehalten. Ist der Federspeicher 40 entlüftet, das heißt druckfrei, so drückt die Feder die Bremsbacken an einen Bremskörper und übt damit eine Bremskraft auf den Kraftwagen 10 aus.

Die Feststellbremse 28 umfasst ein monostabiles Halteventil 42 und ein bistabiles Pneumatikventil 44, die über jeweilige Steuerleitungen 46.1, 46.2 bzw. 48.1, 48.2 mit der elektrischen Steuerung 24 verbunden sind. Das bistabile Pneumatikventil 44 ist über die Druckluftleitung 34 mit dem Druckluftspeicher 36 verbunden und besitzt eine erste, nicht gezeigte Stellung, in der es das Halteventil 42 über eine Druckluftverbindungsleitung 50 mit Druckluft beaufschlagt. In einer in Figur 2 gezeigten, zweiten Stellung sperrt das bistabile Pneumatikventil 44 eine Verbindung zwischen der Druckluftleitung 34 und der Druckluftverbindungsleitung 50 und entlüftet die Druckluftverbindungsleitung 50.

In Figur 2 ist das Halteventil 42 in der ersten, unbestromten Durchgangsstellung gezeigt. Unbestromt bedeutet, dass durch die Steuerleitung 46 kein Strom fließt. In der in Figur 2 gezeigten Stellung verbindet das Halteventil 42 die Druckluftverbindungsleitung 50 mit dem Steuereingang eines Relaisventils 41, das den Druck zu den Federspeichern 40 aussteuert. In einem nicht dargestellten bestromten Zustand sperrt das Halteventil 42 den Druck im Steuereingang des Relaisventils 41 ein und ermöglicht damit eine "Druckhalten"-Funktion in den Federspeichern 40.

In einem bestromten Zustand kann das 3/2-Wege-Pneumatikventil 45 in Figur 2 das Anhängersteuerventil 51 direkt mit dem Vorratsdruck in der Druckluftleitung 34 verbinden. Diese Funktion wird bei einer Anhängerkontrollstellung benötigt, bei der bei gebremstem Zugfahrzeug die Bremsen des Anhängers gelöst werden, um zu überprüfen, ob die Bremswirkung der Federspeicher 40 des Zugfahrzeugs ausreichen, den gesamten Fahrzeugzug zu bremsen. In einem unbestromten Zustand verbindet das 3/2-Wege-Pneumatikventil 45 in Figur 2 die Druckleitung 49 mit der Druckleitung 38, die mit dem Ausgang des Relaisventils 41 verbunden ist.

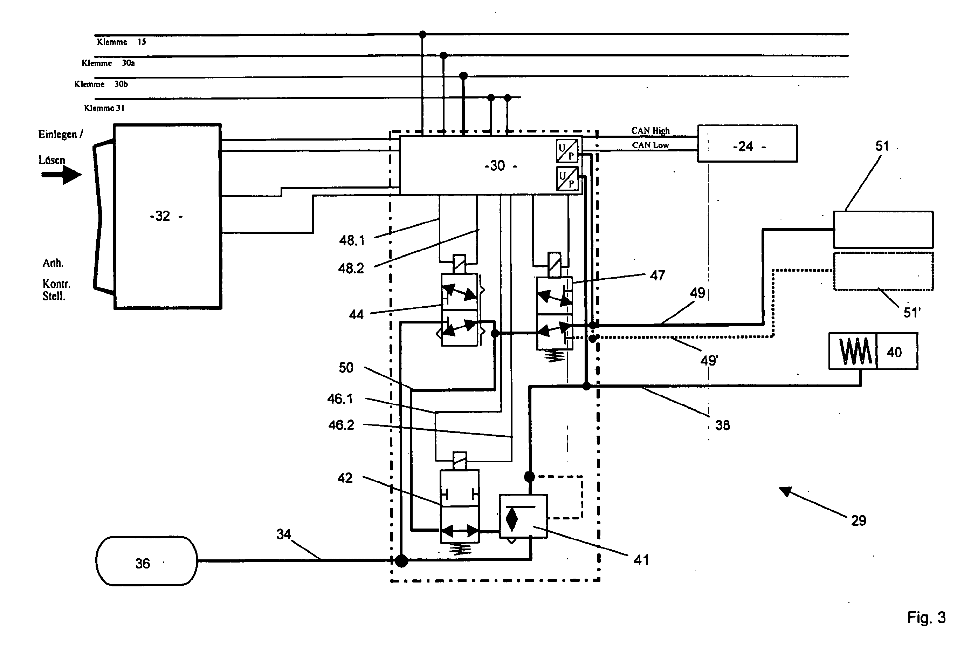

In Figur 3 ist eine weitere Variante einer erfindungsgemäßen elektro-pneumatischen Feststellbremse 29 dargestellt. Diese Variante unterscheidet sich von der in Figur 2 gezeigten Feststellbremse 28 durch geänderte Druckluftanschlüsse an einem 3/2-Wege-Pneumatikventil 47. Das 3/2-Wege-Pneumatikventil 47 ist eingangsseitig ausschließlich mit der Druckluftleitung 50 verbunden, die je nach Stellung des Pneumatikventils 44 mit dem Vorratsdruck aus dem Druckluftspeicher 36 belüftet oder entlüftet ist. In Figur 3 ist ein unbestromter Zustand des 3/2-Wege-Pneumatikventil 47 gezeigt. In dem unbestromten Zustand verbindet das 3/2-Wege-Pneumatikventil 47 die Druckluftverbindungsleitung 50 mit einer Druckleitung 49, die Druckluft zu einem Anhängersteuerventil 51 führt. Wenn gleichzeitig das Halteventil 42 unbestromt ist, herrscht in der Leitung 38 der gleiche Druck wie in der Druckleitung 49.

Wird das 3/2-Wege-Pneumatikventil 47 bestromt, so wird die Verbindung zwischen der Druckluftleitung 50 und der Druckluftleitung 49 unterbrochen und die Druckluftleitungen 50 und 49 gegeneinander verschlossen, so dass eine Halten-Funktion realisiert ist.

In Figur 3 sind ein Anhängersteuerventil 51' und eine Druckluftleitung 49' gestrichelt gezeichnet, um eine andere erfindungsgemäße Anschlussversion des Anhängersteuerventils darzustellen. Dadurch, dass die Druckluftleitung 49' nicht wie mit der durchgezogenen Linie, sondern wie mit der gestrichelten Linie eingezeichnet angeschlossen ist, wird das Schaltverhalten des 3/2-Wege-Pneumatikventils 47 invertiert, so dass damit beispielsweise ein Anhänger, der an das Anhängersteuerventil 51' angeschlossen ist, ungebremst abgestellt werden kann.

Wenn im nachfolgenden Text von einem Bestromen des Halteventils 42 gesprochen wird, um die so genannte Aktivierungsstellung zu realisieren, so ist bei einer Feststellbremse nach der mit durchgezogenen Linien eingezeichneten Variante von Figur 3 stets impliziert, dass auch das 3/2-Wege-Pneumatikventil 47 die Verbindung zwischen den Druckluftleitungen 50 und 49 unterbricht bzw. absperrt.

In der in Figur 3 mit gestrichelten Linien gezeigten Variante ist die Steuereinheit 30 so ausgebildet, dass sie dann, wenn das Halteventil 42 bestromt ist, um die so genannte Aktivierungsstellung zu realisieren, das 3/2-Wege-Pneumatikventil 47 nicht bestromt und damit die Verbindung zwischen den Druckluftleitungen 50 und 49' unterbricht bzw. absperrt.

Erfasst die elektrische Steuerung 24 von den Betriebsdatensensoren 14, 16, 18, 20 (vgl. Figur 1) Betriebsdaten, die auf das unmittelbare Bevorstehen oder Vorliegen einer Notbremssituation hindeuten, so sendet sie ein Steuersignal an die Steuereinheit 30 (Figuren 2 und 3), die daraufhin zunächst das Halteventil 42 bestromt. Dadurch wird die Verbindung zwischen der Druckverbindungsleitung 50 und dem Federspeicher 40 unterbrochen. Unmittelbar daran anschließend bringt die Steuereinheit 30 das bistabile Pneumatikventil 44 in die zweite Stellung, in der die Druckluftverbindungsleitung 50 entlüftet und von dem Druckluftspeicher 36 getrennt ist. Wenn das Halteventil 42 bestromt ist und sich das bistabile Pneumatikventil 44 in seiner zweiten Stellung befindet, befindet sich die Feststellbremse 28 in ihrer Aktivierungsstellung.

In dieser Aktivierungsstellung liegt am Federspeicher 40 noch immer Druckluft an, da aus den Verbindungsleitungen keine Druckluft entweicht. Kommt es zu einem Stromausfall, so wird das Halteventil 42 unbestromt und fällt in den in Figur 2 gezeigten unbestromten Zustand zurück. Durch die Druckluftverbindungsleitung 50 und das Pneumatikventil 44 entweicht die Druckluft in die Umgebung, der Federspeicher 40 wird entlastet und die Feststellbremse 28 übt eine Bremskraft auf den Kraftwagen 10 aus.

Wenn die elektrische Steuerung 24 eine Notbremsung eingeleitet hat, erfasst sie von Anti-Blockier-Sensoren 52.1, 52.2, 52.3, 52.4 (Figur 1), ob die Betriebsbremsen 26 ordnungsgemäß funktionieren. Erfasst die elektrische Steuerung 24, dass Raddrehzahlen von den nicht eingezeichneten Rädern des Kraftwagens 10, sich mit der Zeit nicht so ändern, wie es einem voreingestellten Schwellenwert entspricht, und/oder erfasst die elektrische Steuerung 24, dass von dem Beschleunigungssensor 20 eine Verzögerung gemessen wird, die unterhalb einer vorgegebenen Soll-Verzögerung liegt, sendet die elektrische Steuerung 24 ein Verzögerungsanforderungssignal an die Steuereinheit 30. Dieses Verzögerungsanforderungssignal veranlasst die Steuereinheit 30, den Luftdruck p_{Federspeicher}, der am Federspeicher 40 anliegt, so zu modulieren, dass die von der Feststellbremse 28 gebremsten Räder in einem Anti-Blockier-Modus bremsen. Dazu werden auf bekannte Weise die Messdaten der Anti-Blockier-Sensoren 52.1, 52.2, 52.3, 52.4, die der Betriebsbremse 26 zugeordnet sind, erfasst und auf bekannte Weise verarbeitet. Erfasst die elektrische Steuerung 24, dass die Betriebsbremse 26 ordnungsgemäß funktioniert, aber dennoch die vorgegebene Soll-Verzögerung bzw. Soll-Raddrehzahländerung nicht erreicht wird, so ist dies ein Hinweis darauf, dass eine Fahrbahn, auf der sich der Kraftwagen 10 bewegt, rutschig ist. In diesem Fall unterdrückt die elektrische Steuerung 24 das Verzögerungsanforderungssignal.

Während einer Notbremsung überwacht die elektrische Steuerung 24 beständig den Beschleunigungssensor 20, der einem nicht eingezeichneten Airbag zugeordnet ist. Wenn der Airbag ausgelöst worden ist, sendet die elektrische Steuerung 24 ein Feststell-Signal an die Feststellbremse 28. Daraufhin unterbricht die Steuereinheit 30 die Stromzufuhr zum Halteventil 42, was daraufhin unbestromt ist und den Federspeicher 40 entlüftet. Dadurch wird sichergestellt, dass nach einem Aufprall des Kraftwagens 10 auf ein Hindernis, wie beispielsweise das Vorderfahrzeug 22 (Figur 1) sicher abgestellt wird.

Wird von der elektrischen Steuerung 24 zunächst das unmittelbare Bevorstehen einer Notbremssituation erkannt, tritt diese Notbremssituation jedoch nicht ein, sendet die elektrische Steuerung 24 ein entsprechendes Signal an die Steuereinheit 30 (Figur 2), die daraufhin zunächst das bistabile Pneumatikventil 44 in die in Figur 2 nicht gezeigte erste Stellung bringt und danach das Halteventil 42 in den unbestromten Zustand. Die Feststellbremse 28 befindet sich dann wieder in der Betriebsstellung.

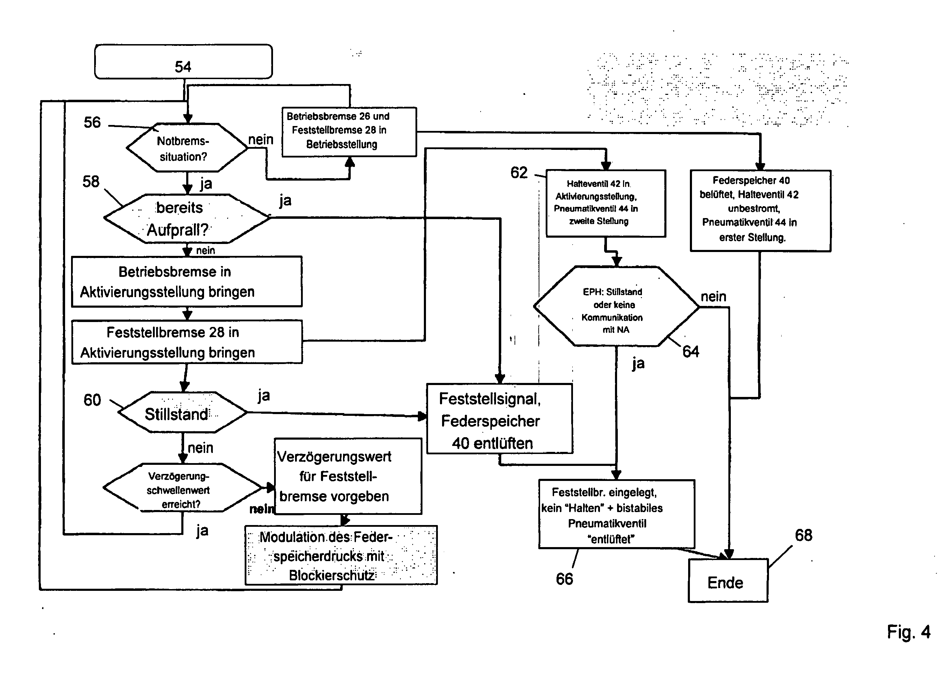

Figur 4 zeigt ein Flussdiagramm eines Programms, das auf der elektrischen Steuerung 24 und der Steuereinheit 30 implementiert ist, wobei einzelne Verfahrensschritte von jeweils einer der beiden Komponenten ausgeführt werden. Ausgehend von einer Startsituation 54 wird in einem Notbremssituationserfassungsschritt 56 erfasst, ob eine Notbremssituation vorliegt. Ist das nicht der Fall, verbleiben die Betriebsbremse 26 und die Feststellbremse 28 in ihrer Betriebsstellung. Wird im Notbremssituationserfassungsschritt 56 eine Notbremssituation erfasst, wird in einem Kollisionserfassungsschritt 58 festgestellt, ob bereits eine Kollision stattgefunden hat. Das kann beispielsweise durch die Abfrage eines Airbag-Systems geschehen. Ergibt sich, dass noch kein Aufprall stattgefunden hat, wird eine entsprechende Nachricht an die Betriebsbremse 28 gesendet, so dass die Verzögerung über die Betriebsbremse 26 umgesetzt wird. Zudem wird die Feststellbremse 28 in die oben beschriebene Aktivierungsstellung gebracht.

Anschließend wird ermittelt, ob der Kraftwagen 10 bereits zum Stillstand gekommen ist. Ist das nicht der Fall, wird von der elektrischen Steuerung 24 erfasst, ob ein vorgegebener Verzögerungs-Schwellenwert erreicht wird. Ist dies der Fall, beginnt das Verfahren von vorne. Ist dies nicht der Fall, wird das oben beschriebene Verzögerungsanforderungssignal von der elektrischen Steuerung 24 an die Steuereinheit 30 gesendet, so dass diese wie oben beschrieben die Bremskraft der Feststellbremse 28 moduliert ändert. Dabei wird stets überprüft, ob eine mangelnde Verzögerung möglicherweise auf eine rutschige Fahrbahn zurückzuführen ist. In diesem Fall wird kein Verzögerungsanforderungssignal an die Steuereinheit 30 ausgesandt.

Ist das Fahrzeug bereits zum Stillstand gekommen (Schritt 60), sendet die elektrische Steuerung 24 das Feststellsignal an die Steuereinheit 30 ab, so dass der Kraftwagen 10 über die Feststellbremse 28 sicher abgestellt wird.

Zum Bringen der Feststellbremse in die Aktivierungsstellung wird, wie in Schritt 62 gezeigt, das Halteventil 42 in seine instabile Stellung und das Pneumatikventil 44 in die zweite Stellung gebracht. In einem nachfolgenden Schritt 64 wird von der elektrischen Steuerung 24 abgefragt, ob der Kraftwagen 10 stillsteht oder ob die Kommunikation zwischen der elektrischen Steuerung 24 und der Steuereinheit 30 unterbrochen ist. Ist dies der Fall, wird in einem Schritt 66 die Feststellbremse 28 wie oben beschrieben eingelegt, und das Fahrzeug gelangt in einen stabilen Zustand 68.

## Patentansprüche

1. Fahrerassistenzsystem für einen Kraftwagen (10), mit
(a) mindestens einem Betriebsdatensensor zum Erfassen von den momentanen oder zukünftigen Bewegungszustand des Kraftwagens (10) charakterisierenden Betriebsdaten und
(b) einer elektrischen Steuerung (24), die ausgebildet ist, um bei einem Vorliegen von vorbestimmten Betriebsdaten eine autonome Notbremsung des Kraftwagens (10) auszulösen, wobei unter einer Notbremsung eine Bremsung des Kraftwagens verstanden wird, die mit höchstmöglicher Verzögerung erfolgt,
**dadurch gekennzeichnet, dass**
(c) die elektrische Steuerung (24) eingerichtet ist, um unmittelbar vor, während oder nach einer Notbremsung eine Feststellbremse (28) des Kraftwagens (10) in eine Aktivierungsstellung zu bringen, in der ein Stromausfall die Feststellbremse (28) passiv in eine Bremsstellung bringt.

2. Fahrerassistenzsystem nach Anspruch 1, **dadurch gekennzeichnet, dass** die elektrische Steuerung (24) ausgebildet ist, um die Feststellbremse (28) bei einem Stillstand des Kraftwagens (10) nach einer Notbremsung durch ein Bremssignal aus der Aktivierungsstellung in die Bremsstellung zu bringen.

3. Fahrerassistenzsystem nach Anspruch 1 oder 2, **dadurch gekennzeichnet, dass** die elektrische Steuerung (24)
(i) mit einem mindestens einachsigen Beschleunigungssensor (20) eines Airbags des Kraftwagens (10) verbunden und
(ii) eingerichtet ist, um beim Vorliegen einer Notbremsung zu erfassen, ob der Airbag ausgelöst worden ist, und um bejahendenfalls die Feststellbremse (28) in die Bremsstellung zu bringen.

4. Fahrerassistenzsystem nach einem der vorstehenden Ansprüche, **dadurch gekennzeichnet, dass** die elektrische Steuerung (24) eingerichtet ist, um die Feststellbremse (28) moduliert zu betreiben, wenn der Kraftwagen (10) im Fall einer autonomen Notbremsung eine vorgegebene Mindest-Verzögerung unterschreitet.

5. Fahrerassistenzsystem nach Anspruch 4, **dadurch gekennzeichnet, dass** die elektrische Steuerung (24) eingerichtet ist, um die Feststellbremse (28) in einem Anti-Blockier-Modus zu betreiben.

6. Kraftwagen (10) mit
(a) einem Fahrerassistenzsystem nach einem der Ansprüche 1 bis 5,
(b) einer elektro-pneumatischen Feststellbremse (28), die einen Federspeicher (40) besitzt, und
(c) einer Betriebsbremse (26).

7. Kraftwagen (10) nach Anspruch 6, **dadurch gekennzeichnet, dass**
(i) die Feststellbremse (28)
- ein monostabiles Halteventil (42), das sich bei Normalbetrieb des Kraftwagens (10) in einer stabilen unbestromten Durchgangstellung befindet,
- ein bistabiles Pneumatikventil (44), das bei Normalbetrieb des Kraftwagens (10) in einer ersten Stellung ist und die Feststellbremse (28) mit einer Druckluftversorgung des Kraftwagens (10) verbindet,
- und einen Federspeicher (40),
umfasst, wobei die Feststellbremse (28) bei Normalbetrieb des Kraftwagens (10) belüftet ist, und dass
(ii) die elektrische Steuerung (24) eingerichtet ist, um im Fall einer autonomen Notbremsung die Feststellbremse (28) in die Aktivierungsstellung zu bringen, in der
- das Halteventil (42) bestromt und dadurch in eine instabile, geschlossene Stellung gebracht wird und
- das bistabile Pneumatikventil (44) in einer zweiten Stellung ist,
(iii) wobei die Feststellbremse (28) so ausgebildet ist, dass sich bei einem Stromausfall das Halteventil (42) öffnet und den Federspeicher (40) entlüftet.

8. Kraftwagen (10) nach Anspruch 6 oder 7, **gekennzeichnet durch** ein Antiblockiersystem für die Betriebsbremsen (26), wobei die elektrische Steuerung (24) eingerichtet ist, um im Fall einer Notbremsung
- vom Antiblockiersystem eine Verzögerung des Kraftwagens (10) charakterisierende Bremsdaten und Zustandsdaten, die ein Funktionieren des Antiblockiersystems kodieren, zu ermitteln,
- die Bremsdaten mit einem vorgegebenen Brems-Schwellenwert zu vergleichen
und
dann, wenn die Bremsdaten den vorgegebenen Brems-Schwellenwert nicht erreichen und die Zustandsdaten ein Versagen des Betriebsbremskreises an der Achse mit den Feststellbremsen (28) anzeigen, die Feststellbremse (28) so anzusteuern, dass sie mit einer modulierten Bremskraft bremst.

## Claims

1. Driver assistance system for a motor vehicle (10), having
(a) at least one operating data sensor for acquiring operating data characterizing the instantaneous or future movement state of the motor vehicle (10), and
(b) an electric controller (24) which is designed to trigger autonomous emergency braking of the motor vehicle (10) when predetermined operating data is present, wherein emergency braking is understood to be braking of the motor vehicle which takes place with the maximum possible deceleration,
**characterized in that**
(c) the electric controller (24) is configured to move a parking brake (28) of the motor vehicle (10) into an activated position immediately before, during or after emergency braking, in which activated position a power failure moves the parking brake (28) passively into a brake position.

2. Driver assistance system according to Claim 1, **characterized in that** the electric controller (24) is designed to move the parking brake (28) out of the activated position into the brake position by means of a brake signal after emergency braking when the motor vehicle (10) is in a stationary state.

3. Driver assistance system according to Claim 1 or 2, **characterized in that** the electric controller (24) is
(i) connected to an at least single-axis acceleration sensor (20) of an airbag of the motor vehicle (10), and
(ii) is configured to sense, in the case of emergency braking, whether the airbag has been triggered and if so to move the parking brake (28) into the brake position.

4. Driver assistance system according to one of the preceding claims, **characterized in that** the electric controller (24) is configured to operate the parking brake (28) in a modulated fashion if the motor vehicle (10) drops below a predefined minimum deceleration in the case of autonomous emergency braking.

5. Driver assistance system according to Claim 4, **characterized in that** the electric controller (24) is configured to operate the parking brake (28) in an anti-lock braking mode.

6. Motor vehicle (10) having
(a) a driver assistance system according to one of Claims 1 to 5,
(b) an electro-pneumatic parking brake (28) which has a spring energy storage mechanism (40), and
(c) a service brake (26).

7. Motor vehicle (10) according to Claim 6, **characterized in that**
(i) the parking brake (28) comprises
- a monostable holding valve (42) which is in a stable, non-energized open position when the motor vehicle (10) is operating normally,
- a bistable pneumatic valve (44) which, when the motor vehicle (10) operating normally, is in a first position and connects the parking brake (28) to a compressed air supply of the motor vehicle (10),
- and a spring energy storage mechanism (40), wherein the parking brake (28) is ventilated when the motor vehicle (10) is operating normally, and **in that**
(ii) the electric controller (24) is configured to move the parking brake (28) into the activated position in the case of autonomous emergency braking, in which activated position
- the holding valve (42) is energized and as a result is moved into an unstable, closed position, and
- the bistable pneumatic valve (44) is in a second position,
(iii) wherein the parking brake (28) is embodied in such a way that in the event of a power failure the holding valve (42) opens and vents the spring energy storage mechanism (40).

8. Motor vehicle (10) according to Claim 6 or 7, **characterized by** an anti-lock braking system for the service brakes (26), wherein the electric controller (24) is configured, in the case of emergency braking
- to obtain from the anti-lock brake system braking data which characterize a deceleration of the motor vehicle (10) and state data which encode functioning of the anti-lock brake system,
- to compare the braking data with a predefined braking threshold value,
and
if the braking data do not reach the predefined brake threshold value and the state data indicate failure of the service brake circuit on the axle of the parking brakes (28), to actuate the parking brake (28) in such a way that it brakes with a modulated braking force.

## Revendications

1. Système d'assistance du conducteur pour un véhicule automobile (10), avec :
(a) au moins un capteur de données de fonctionnement servant à détecter des données de fonctionnement caractérisant l'état de mouvement actuel ou futur du véhicule automobile (10) ; et
(b) un élément de commande électrique (24) conçu pour déclencher, en présence de données de fonctionnement prédéfinies, un freinage d'urgence autonome du véhicule automobile (10), étant entendu par freinage d'urgence du véhicule automobile le ralentissement le plus important possible ;
**caractérisé en ce que** :
(c) l'élément de commande électrique (24) est conçu pour amener, pendant ou après un freinage d'urgence, un frein de stationnement (28) du véhicule automobile (10) dans une position d'activation dans laquelle une panne de courant amène passivement le frein de stationnement (28) dans une position de freinage.

2. Système d'assistance du conducteur selon la revendication 1, **caractérisé en ce que** l'élément de commande électrique (24) est réalisé pour amener le frein de stationnement (28) de la position d'activation dans la position de freinage en présence d'un arrêt du véhicule automobile (10) après un freinage d'urgence provoqué par un signal de freinage.

3. Système d'assistance du conducteur selon la revendication 1 ou 2, **caractérisé en ce que** l'élément de commande électrique (24) :
(i) est relié à un capteur d'accélération (20) au moins monoaxial d'un airbag du véhicule automobile (10) ; et
(ii) est conçu pour détecter, en présence d'un freinage d'urgence, si oui ou non l'airbag est déclenché et si c'est le cas, pour amener le frein de stationnement (28) dans la position de freinage.

4. Système d'assistance du conducteur selon l'une quelconque des revendications précédentes, **caractérisé en ce que** l'élément de commande électrique (24) est conçu pour actionner le frein de stationnement (28) de façon modulée lorsque le véhicule automobile (10) passe en dessous d'un ralentissement minimal prédéfini en cas de freinage d'urgence autonome.

5. Système d'assistance du conducteur selon la revendication 4, **caractérisé en ce que** l'élément de commande électrique (24) est conçu pour actionner le frein de stationnement (28) dans un mode antiblocage.

6. Véhicule automobile (10) avec :
(a) un système d'assistance du conducteur selon l'une quelconque des revendications 1 à 5 ;
(b) un frein de stationnement (28) électropneumatique possédant un accumulateur sur ressorts (40) ; et
(c) un frein de service (26).

7. Véhicule automobile (10) selon la revendication 6, **caractérisé en ce que** :
(i) le frein de stationnement (28) comprend :
- une soupape d'arrêt monostable (42) se trouvant, en situation de fonctionnement normal du véhicule automobile (10), dans une position de passage non alimentée en courant stable ;
- une soupape pneumatique bistable (44) se trouvant, en situation de fonctionnement normal du véhicule automobile (10), dans une première position et reliant le frein de stationnement (28) à une alimentation en air comprimé du véhicule automobile (10) ;
- et un accumulateur sur ressorts (40) ;
le frein de stationnement (28) étant ventilé en situation de fonctionnement normal du véhicule automobile (10) ; et que
(ii) l'élément de commande électrique (24) est conçu pour amener, en cas de freinage d'urgence autonome, le frein de stationnement (28) dans la position d'activation dans laquelle :
- la soupape d'arrêt (42) est alimentée en courant et ainsi amenée dans une position fermée instable ; et
- la soupape pneumatique bistable (44) est dans une seconde position ;
(iii) le frein de stationnement (28) étant conçu de façon à ouvrir la soupape d'arrêt (42) en cas de panne de courant et à ventiler l'accumulateur sur ressorts (40).

8. Véhicule automobile (10) selon la revendication 6 ou 7, **caractérisé par** la présence d'un système d'antiblocage pour le frein de service (26), l'élément de commande électrique (24) étant conçu, en cas de freinage d'urgence :
- pour déterminer les données de freinage et les données d'état caractérisant un ralentissement du véhicule automobile (10) par le système antiblocage et codant un fonctionnement du système antiblocage ;
- pour comparer les données de freinage à une valeur seuil de freinage prédéfinie ; et
- lorsque les données de freinage n'atteignent pas la valeur seuil de freinage prédéfinie et que les données d'état indiquent une défaillance du circuit de frein de service au niveau de l'essieu avec les freins de stationnement (28), pour commander au frein de stationnement (28) de freiner avec une force de freinage modulée.
